# EUROPEAN PATENT APPLICATION

(11) **EP 1 045 382 A2**
(43) Date of publication of application: **18.10.2000**
(21) Application number: 00106588.7
(22) Date of filing: 28.03.2000
(51) Int. Cl.: G11B 15/68, G11B 17/22, G11B 23/023, G11B 33/04

(54) **Automatic dispenser for audio-visual products such as videocassettes, CDs and the like**

(30) Priority: 16.04.1999 IT TO990307
(71) Applicant: GV di Bragadin Luigi Sas, 10098 Rivoli (IT)
(72) Inventor: Bragadin, Luigi, c/o GV di Bragadin Luigi Sas, 10098 Ferriera di Buttigliera Alta (IT)
(74) Representative: Marchitelli, Mauro

(57) **Abstract**

Automatic dispenser for audio-visual products such as videocassettes, CDs and the like, in which each product (38, 44) has an individual visual code (40, 48). The dispenser comprises:
- an outer casing (12) having at least one aperture (18) via which the products are retrieved,
- a motorized conveyor (20) fitted with a plurality of seats (26) designed to receive and retain individual products,
- an electronic control unit (36) designed to operate the conveyor (20) so as to convey a selected product to a retrieval station (28), and
- an optical reading device (30) designed to read the identification code (40, 48) on the product (38, 44) which is from time to time placed in line with the reading direction of the reading device (30).

At least one seat (26) of the conveyor is fitted with a reflecting surface (52) positioned such that it produces a reflected image, that can be seen by the reading device (30), of an identification code (48) located on a surface of the product (44) that cannot be seen by the said reading device (30).

## Description

The present invention relates to an automatic dispenser for audio-visual products, of the type used for the automatic rental or sale of products such as videocassettes, CDs and the like.

In this type of dispenser, each product bears an individual visual code which usually consists of bar code.

Automatic dispensers of known type comprise:
- an outer casing having at least one aperture via which the products are retrieved,
- a motorized conveyor fitted with a plurality of seats designed to receive and retain individual products,
- an electronic control unit designed to operate the conveyor so as to convey a selected product to a retrieval station, and
- an optical reading device designed to read the identification code on the product which is from time to time placed in line with the reading direction of the device.

The object of the present invention is to provide an automatic dispenser of the type specified above which makes it possible to read the identification code on products which differ considerably in terms of their shape and size and in which the respective identification codes are applied to the surfaces of the products with a different orientation to that of the reading direction of the optical reading device.

According to the present invention, this object is achieved by the fact that the invention includes a reflecting surface positioned such that it produces a reflected image, that can be seen by the reading device, of an identification code located on a surface of the product that cannot be seen by the reading device.

By virtue of this solution, the automatic dispenser can be loaded in any way with products of various types, such as for example videocassettes and CDs, and the said reading device is able to read bar codes irrespective of whether these are located on a surface perpendicular to its reading direction or on a surface parallel to its reading direction which, without the abovementioned adaptor, would not be visible to the optical reading device.

The present invention will now be described in detail with reference to the attached drawings which are given solely by way of non-limiting example and in which:
Figure 1 is a diagrammatic perspective view of an automatic dispenser for audio-visual products,
Figure 2 is a diagrammatic lateral section on the plane II-II of Figure 1,
Figure 3 is a diagrammatic perspective view illustrating an adaptor according to the present invention,
Figure 4 is a diagrammatic section on the plane IV-IV of Figure 3,
Figure 5 is a diagrammatic view in the direction of the arrow V in Figure 2, and
Figure 6 is a plan view of a CD with an identification code of circular type.

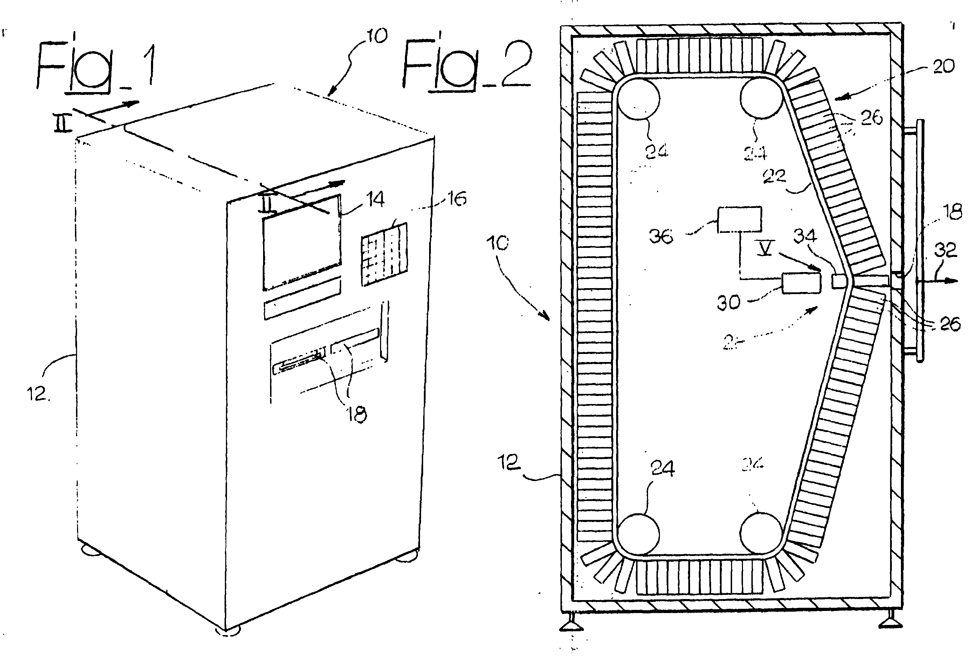

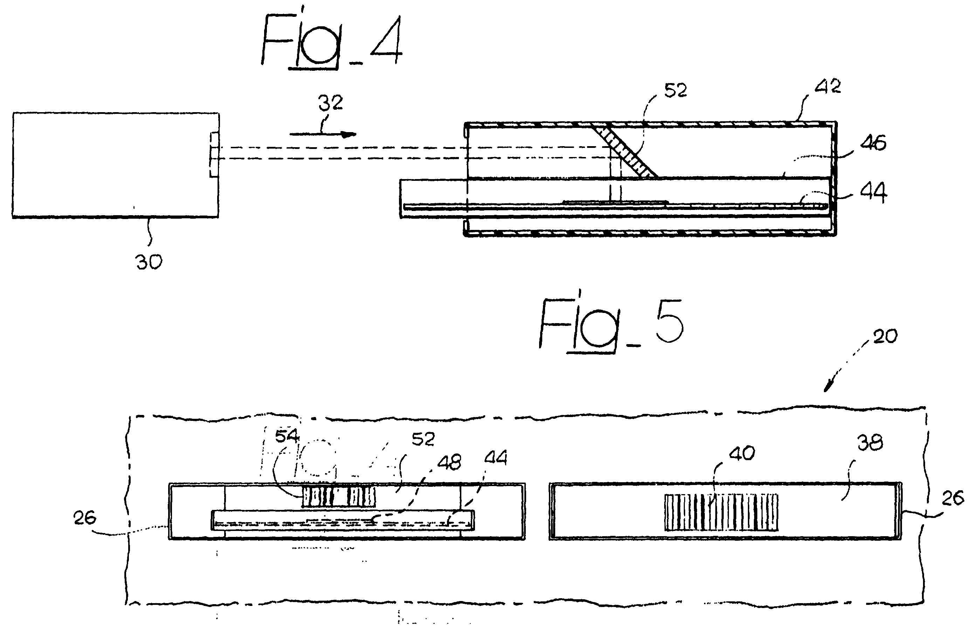

With reference to Figures 1 and 2, the reference numeral 10 denotes an automatic dispenser of audio-visual products, comprising an outer casing 12 which supports, in a manner known per se, a display unit 14 and a keypad diagrammatically indicated by 16. The outer casing 12 includes at least one aperture via which the products are retrieved and, optionally, returned. In the example illustrated in Figure 1 two apertures, denoted 18, have been provided.

The casing 12 contains a conveyor 20 including a drive chain or belt which is closed in a loop 22 and works in conjunction with a plurality of deflection pulleys 24, one of which is motorized. The chain 22 carries a plurality of seats 26, each of which is designed to receive and retain one audio-visual product. The present invention is not restricted to automatic dispensers having belt or chain conveyors and can also be applied to dispensers having drum conveyors, the latter being horizontal or vertical.

A product retrieval station 28 is located in line with the aperture or apertures 18 and comprises at least one optical reading device 30 which is known per se. The audio-visual product contained in the seat 26, which is from time to time located in the retrieval station 28, can be removed from its seat by means of a movement in the direction indicated by the arrow 32 in Figure 2. The reading device 30 uses an optical reader of laser type which reads in a direction parallel to the direction 32 in which the products are retrieved. As can be seen in Figure 2, the reading device 30 is located in a fixed position on the opposite side of the seat 26, which is from time to time located in the retrieval station 28, to that facing the aperture 18. The retrieval station 28 contains a deflection member 34 which modifies the path of the chain 22 so that the seat 26 which is in line with the aperture 18 is angularly separated from the adjacent seats. The reading device 30 reads the identification code on the product which is from time to time located in the retrieval station 28 and conveys this information to an electronic control unit 36 which operates the conveyor 30 and, in a manner known per se, manages the various functions relating to the search for and selection of the products loaded in the dispenser 10.

The conveyor 26 can have several arrays of seats positioned next to each other in a direction perpendicular to the plane illustrated in Figure 2. In the example illustrated in the figures, the conveyor 20 has two arrays of seats associated with the two retrieval/insertion apertures 18. As shown in Figure 5, the shape and dimensions of the seats 26 are compatible with those of standard VHS videocassettes. The seat 26 on the right-hand side of the figure contains a videocassette 38 with a bar code 40 applied to the surface facing the reading device 30 and perpendicular to the reading direction 32 (Figure 2).

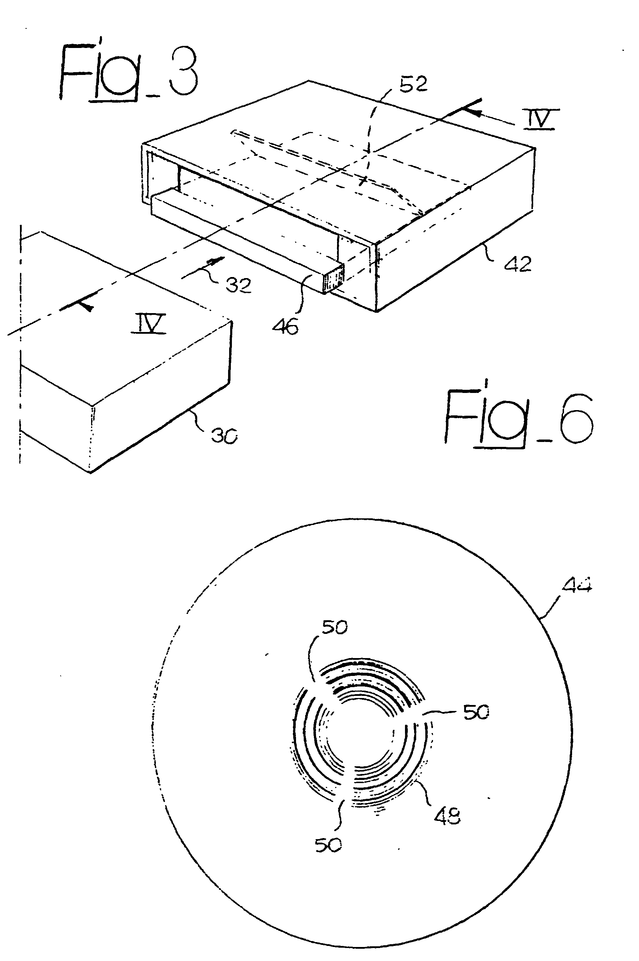

Referring now to Figures 3 and 4, the numeral 42 denotes an adaptor whose external dimensions are similar to those of a standard VHS videocassette and which can be inserted in the seats 26 of the conveyor 20 without having to make any modifications to the seats provided in the version of the conveyor 20 designed to receive videocassettes. The adaptor 42 is designed to contain an audio-visual product other than a videocassette, such as for example a CD 44 contained inside an ordinary CD case denoted 46. The adaptor 42 has a seat inside which the case 46 containing the CD 44 is inserted such that it can slide freely. As illustrated in Figure 6, a bar code 48 identifying the type of product is applied directly to the CD 44. The bar code 48 consists of a plurality of concentric circular bars which contain the same information as a linear parallel-line bar code. The circular bars are preferably interrupted at pre-established points in order to leave empty gaps 50 which can, for example, be used for writing a numeric code corresponding to the bar code. The case 46 has a transparent upper surface or else has a through aperture above the bar code 48 so that the code 48 can be seen from outside the case. As can be seen in Figures 3 and 4, the adaptor 42 has a reflecting surface 52 which is inclined at, for example, 45° to the CD surface on which the bar code 48 is applied. The reflecting surface 52 is positioned such that it forms a reflected image of the bar code 48 that can be seen by the reading device 30 in the reading direction 32. As has been illustrated diagrammatically in Figure 5, the reflecting surface 52 produces a reflected image 54 containing the same visual information as the bar code 48 and is positioned such that it can be seen by the reading device 30, in a manner similar to a linear bar code 40 applied directly onto a surface perpendicular to the reading direction 32. Thus, while not having to alter the structure of the machine 10 in any way, and simply by adding the adaptors 42, it is possible to use the automatic dispenser 10 for the sale or rental of CDs, CD-ROMs, DVDs and the like, as well as for the sale and rental of videocassettes. The adaptors 42 can also be used in already existing machines which can thus be adapted for the rental or sale of products on optical media without the need to make any structural modifications either to the conveyor or to other components of the automatic dispenser.

## Claims

1. Automatic dispenser for audio-visual products such as videocassettes, CDs and the like, in which each product (38, 44) has an individual visual code (40, 48), the dispenser comprising:
- an outer casing (12) having at least one aperture (18) via which the products are retrieved,
- a motorized conveyor (20) fitted with a plurality of seats (26) designed to receive and retain individual products,
- an electronic control unit (36) designed to operate the conveyor (20) so as to convey a selected product to a retrieval station (28), and
- an optical reading device (30) designed to read the identification code (40, 48) on the product (38, 44) which is from time to time placed in line with the reading direction of the reading device (30),
characterized in that at least one of the abovementioned seats (26) is fitted with a reflecting surface (52) positioned such that it produces a reflected image, that can be seen by the reading device (30), of an identification code (48) located on a surface of the product (44) that cannot be seen by the said reading device (30).

2. Automatic dispenser according to Claim 1, characterized in that the abovementioned reflecting surface (52) is positioned such that the image of an identification code (48) located on a surface essentially parallel to the reading direction (32) of the abovementioned reading device (30) is reflected essentially through 90°.

3. Automatic dispenser according to Claim 2, characterized in that the products (44) in the seats having a reflecting surface have an identification code (48) formed by a plurality of concentric circular bars.

4. Automatic dispenser according to Claim 1, characterized in that it comprises at least one adaptor (42) carrying the abovementioned reflecting surface (52), the adaptor being designed to receive a product (44, 46) and being intended to be inserted in a seat (26) of the conveyor.

5. Automatic dispenser according to Claim 4, characterized in that the dimensions of the adaptor (42) are compatible with those of standard VHS videocassettes.
